(19) Europäisches Patentamt
European Patent Office
Office européen des brevets

(11) Veröffentlichungsnummer: **0 257 266**
**A1**

(12) **EUROPÄISCHE PATENTANMELDUNG**

(21) Anmeldenummer: **87110075.6**

(22) Anmeldetag: **13.07.87**

(51) Int. Cl.[4]: **C08G 18/68**, C08G 18/10, C08G 18/32, C08F 283/01

(30) Priorität: **23.07.86 DE 3624914**

(43) Veröffentlichungstag der Anmeldung: **02.03.88 Patentblatt 88/09**

(84) Benannte Vertragsstaaten: **AT DE FR GB IT**

(71) Anmelder: **BAYER AG**
**Konzernverwaltung RP Patentabteilung**
**D-5090 Leverkusen 1 Bayerwerk(DE)**

(72) Erfinder: **Brassat, Bert, Dr.**
**Bodelschwinghstrasse 30**
**D-4150 Krefeld(DE)**
Erfinder: **Uerdingen, Walter, Dr.**
**Humperdinckstrasse 41**
**D-5090 Leverkusen 1(DE)**
Erfinder: **Hess, Bernhard, Dr.**
**Kaldenhausener Strasse 84**
**D-4130 Moers 2(DE)**
Erfinder: **Halpaap, Reinhard, Dr.**
**Kleinfeldchensweg 37 b**
**D-5000 Köln 91(DE)**
Erfinder: **Pedain, Josef, Dr.**
**Haferkamp 6**
**D-5000 Köln 80(DE)**

(54) **Verfahren zur Herstellung eingedickter Polyesterharzmassen, diese Massen und ihre Verwendung.**

(57) Ungesättigte Polyesterharze, deren Polyester freie Isocyanatgruppen enthalten, können mit Azomethingruppenhaltigen Verbindungen eingedickt werden; gegenüber der bislang üblichen Eindickung mit Magnesiumoxid weist das neue Verfahren beträchtliche Vorteile auf.

EP 0 257 266 A1

## Verfahren zur Herstellung eingedickter Polyesterharzmassen, diese Massen und ihre Verwendung

Die Erfindung betrifft ein Verfahren zur Herstellung eingedickter Formmassen auf Basis ungesättigter Polyesterharze, wobei die Eindickung durch Kettenverlängerungsreaktion zwischen Isocyanatgruppen des ungesättigten Polyesters und einer in situ erzeugten Verbindung abläuft, die pro Molekül zwei bis drei gegenüber Isocyanat reaktionsfähige Gruppen enthält. Die Erfindung betrifft weiterhin die derart eingedickten Formmassen und ihre Verwendung zur Herstellung gehärteter Formkörper.

Es ist bekannt, daß faserverstärkte ungesättigte Polyesterharze, die durch Verpressen oder Spritzgießen verarbeitet werden sollen, in der Regel eingedickt oder in einen sogenannten "B-Zustand" übergeführt werden. Man versteht darunter einen chemischen oder physikalischen Vorgang, der dem Material die hohe Viskosität verleiht, die für eine klebfreie Handhabung, eine einwandfreie Formfüllung und einen gleichmäßigen Transport der Füll-und Verstärkungsstoffe bei der Formgebung notwendig ist. Damit wird es möglich, das Mischen des Polyesterharzes mit den übrigen Bestandteilen bei niedriger Harzviskosität durchzuführen und so eine optimale Benetzung der Verstärkungsstoffe durch das Harz zu erreichen, ohne daß die Verstärkungsfasern durch zu starke Knet-oder Scherwirkung zerstört werden.

Das in der Praxis übliche Verfahren zur Eindickung ungesättigter Polyesterharze verwendet Erdalkalimetalloxide bzw. -hydroxide, insbesondere Magnesiumoxid, als chemisches Verdickungsmittel.

Dieses Verfahren ist zwar wirkungsvoll, aber schlecht reproduzierbar, weil neben den Eigenschaften des einzudickenden Harzes folgende Parameter die Eindickung beeinflussen:

(i) die Eigenschaften des Eindickungsmittels wie Teilchengröße und -form, Reinheit, Oberflächenbeschaffenheit;

(ii) die Eigenschaften der Zuschlagstoffe wie Feuchtigkeitsgehalt, Azidität bzw. Basizität der Füllstoffe, Zusammensetzung und Konzentration von Schlichten und Bindern der Verstärkungsstoffe;

(iii) die Zeit: Das Fortschreiten des Viskositätsanstiegs führt dazu, daß der Verarbeiter von Ansatz zu Ansatz und von Tag zu Tag mit wechselnden Viskositäten zu rechnen hat, was die Reproduzierbarkeit der Formgebung und der Härtung und damit die Qualität der gehärteten Formkörper beeinträchtigen kann.

Es hat deshalb nicht an Versuchen gefehlt, in die mit Erdalkalimetalloxiden bzw. -hydroxiden bewirkte Eindickung ungesättigter Polyesterharze regelnd einzugreifen (US-PS 3 714 292, JP 58 059 210 DE-AS' 2 315 494, DE-OS 2 311 395, 2 454 773, EP-A 147 727). Wenn auch diese Regler zu manchen Verbesserungen führen, können sie doch einen wesentlichen Nachteil der anorganisch eingedickten Polyesterharze nicht kompensieren: Die Eindickung wird unter Salzbildung mit freien Carboxylgruppen des ungesättigten Polyesters bewirkt, und diese salzartigen Bindungen sind natürlich auch noch nach der Härtung des Harzes hydrolyseempfindlich, was die Gefährdung des polymeren Netzwerkes mit sich bringt.

Es ist auch schon versucht worden, die Reaktionsfähigkeit von Isocyanatgruppen bei der Herstellung von Formkörpern aus ungesättigten Polyesterharzen zu verwenden. So hat man z.B. bereits ungesättigte Polyesterharze, die Diisocyanate und Polyhydroxylverbindungen enthielten, gehärtet; die entstehenden Formkörper sollen weniger spröde sein und eine bessere Schlagzähigkeit besitzen (US-PS 3 886 229, 4 062 826).

Man hat auch schon vorgeschlagen, ungesättigte Polyesterharze dadurch einzudicken, daß man einer Mischung aus ungesättigtem Polyesterharz und Isocyanat-terminiertem gesättigtem Polyester bestimmte Diamine zusetzt, worauf diese Mischungen unter Bildung von Harnstoffgruppen gelieren (US-PS 4 073 828, 4 129 641).

Keiner dieser Vorschläge hat in der Praxis Bedeutung erlangt - sei es, weil die angegebenen Verfahren über hochviskose Produkte rasch und unaufhaltsam zu vernetzten, nicht mehr verarbeitbaren Formmassen führen oder die Reaktionen für eine geordnete Einarbeitung von Verstärkungsmitteln (die im Interesse einer guten Benetzung, einer gleichmäßigen Verteilung im Harz und der Erhaltung der Faserlänge des Verstärkungsmittels vor dem Erreichen hoher Viskositäten abgeschlossen sein soll) zu rasch und unkontrollierbar ablaufen.

Die EP-A 28 470 beschreibt ein Verfahren zum Eindicken ungesättigter Polyesterharze durch Bildung von Polyharnstöffen aus Polyisocyanaten und Polyaminen. Dabei geht man so vor, daß die Polyamine im ungesättigten Polyesterharz gelöst werden; die Eindickung wird dann durch die Polyisocyanat-Zugabe eingeleitet. Das Verfahren hat aber den Nachteil, daß die Ausgangmischung aus Polyamin und Polyesterharz nicht über längere Zeiten stabil ist, da Amine einerseits zur Reaktion mit Estergruppen unter Amidbildung, andererseits zur Addition an die C=C-Doppelbindung des ungesättigten Polyesters neigen.

Ferner läuft auch hier die Polyharnstoffbildung und damit der Eindickungsvorgang so schnell ab ("within minutes"), daß die Topfzeit (Zeit bis zum Erreichen einer Viskosität von 60 000 mPa.s) für eine Einarbeitung von Verstärkungsmitteln zu kurz ist.

Überraschenderweise ließ sich das Problem des Standes der Technik erfindungsgemäß dadurch lösen, daß man für das ungesättigte Polyesterharz einen Isocyanatgruppenhaltigen Polyester auswählt und als Eindickungsmittel eine organische polyfunktionelle Verbindung mit mindestens ein bis drei, vorzugsweise aber mit zwei Azomethingruppen verwendet.

Gegenstand der Erfindung ist also ein Verfahren zur Herstellung eingedickter Polyesterharz-Formmassen mit Viskositäten von mindestens 1 000 000 mPa.s aus

A) 30 bis 85, vorzugsweise 45 bis 75 Gew.-% $\alpha,\beta$-ethylenisch ungesättigtem Polyester,

B) 10 bis 60, vorzugsweise 20 bis 50 Gew.-% mit A) copolymerisierbarem Monomer,

C) 3 bis 40, vorzugsweise 4 bis 15 Gew.-% mit A) unter Molekülaufbau reagierendem organischen Eindickungsmittel,

D) 0,1 bis 3 Gew.-% zur Initierung der Copolymerisation von A) und B) befähigtem Radikalbildner und gegebenenfalls

E) weiteren üblichen Zusätzen. wobei sich die Prozentangaben auf die Summe der Komponenten A) bis D) beziehen,

dadurch gekennzeichnet, daß

1) der Polyester A 0,5 bis 12, vorzugsweise 1 bis 7 Gew.-%, bezogen auf Polyester A, freie Isocyanatgruppen enthält und

2) die Komponente C eine Verbindung ist, die pro Molekül a) mindestens eine und höchstens drei Azomethingruppen und gegebenenfalls b) eine oder zwei Gruppen aus der Reihe Hydroxyl-, primäre und sekundäre Aminogruppen enthält, wobei die Summe a) + b) pro Molekül maximal 3 beträgt, mit der Maßgabe, daß die Azomethingruppen nicht Teil eines aromatischen Ringes sind.

Für das erfindungsgemäße Verfahren geeignete Isocyanatgruppen-haltige ungesättigte Polyester (A) können hergestellt werden, indem man Hydroxylgruppen-haltige Polyester (A1) mit Diisocyanate umsetzt, wobei das Molverhältnis der OH-Gruppen im Polyester (A1) zum Diisocyanat vorzugsweise 0,6 bis 1 beträgt. Die hierbei zu verwendenden ungesättigten Polyester (A1) können nach bekannten Verfahren durch Polykondensation mindestens einer $\alpha,\beta$-ethylenisch ungesättigten Dicarbonsäure mit 4 bis 6 C-Atomen (oder deren esterbildenden Derivaten), gegebenenfalls in Abmischung mit bis zu 2 Mol (pro Mol $\alpha,\beta$-ethylenisch ungesättigte Dicarbonsäurekomponente) einer oder mehrerer Dicarbonsäuren mit 4 bis 20 C-Atomen, die keine ungesättigten aliphatischen Gruppen enthalten (oder deren esterbildenden Derivaten), mit mindestens einem zweiwertigen Alkohol mit 2 bis 30 C-Atomen hergestellt werden.

Beispiele für bevorzugt zu verwendende ungesättigte Dicarbonsäuren oder ihre Derivate sind Maleinsäure, Maleinsäureanhydrid und Fumarsäure. Weiterhin können z.B. Mesaconsäure, Citraconsäure, Itaconsäure und Chlormaleinsäure verwendet werden.

Bevorzugt zu verwendende Dicarbonsäuren, die keine ungesättigten aliphatischen Gruppen enthalten, sind Phthalsäure, Isophthalsäure, Terephthalsäure, Hexa-und Tetrahydrophthalsäure, Endomethylentetrahydrophthalsäure, Bernsteinsäure, Glutarsäure, Adipinsäure, Sebacinsäure, Trimellithsäure, Hexachlorendomethylentetrahydrophthalsäure, Hexachlor -und Hexabromphthalsäure; unter ihren esterbildenden Derivaten sind ihre Ester (insbesondere solche mit niedrig siedenden einwertigen Alkoholen wie Methyl-oder Ethylalkohol), ferner ihre Säureanhydride und Säurehalogenide zu verstehen.

Bevorzugte zweiwertige Alkohole sind Ethylenglykol, Propandiol-1,2 und Propandiol-1,3, Diethylenglykol, Dipropylenglykol, Butandiol-1,3, Butandiol-1,4, Neopentylglykol, 2-Ethyl-propandiol-1,3, Hexandiol-1,6, (cyclo-)aliphatische Diole wie Perhydrobisphenol A und oxalkylierte Bisphenole.

Besonders bevorzugte Polyester (A1) sind unverzweigt oder haben einen geringen Verzweigungsgrad. Sie lassen sich herstellen entweder unter Verwendung von Diolen mit nicht-vicinalen Hydroxylgruppen, wie Propandiol-1,3, Neopentylglykol, Butandiol-1,4, 2-Ethyl-propandiol-1,3 und Hexandiol-1,6, oder durch Polykondensation bzw. Polyaddition von Epoxiden wie Ethylenoxid oder Propylenoxid mit den oben genannten Dicarbonsäuren oder Anhydriden.

Zur Überführung der Hydroxylgruppen-haltigen ungesättigten Polyester (A1) in Isocyanatgruppenhaltige Polyester (A) können aliphatische, cycloaliphatische, araliphatische oder aromatische Diisocyanate mit 4 bis 30 C-Atomen verwendet werden, z.B. 1,4-Butandiisocyanat, 1,6-Hexandiisocyanat, 1,4-Cyclohexandiisocyanat, 1-Methyl-2,4-diisocyanatcyclohexan, Isophorondiisocyanat, 4,4'-Dicyclohexylmethandiisocyanat, 2,4-und 2,6-Toluylendiisocyanat, 4,4'-Diphenylmethandiisocyanat, 4,4'-Diphenylpropandiisocyanat, p-Phenylendiisocyanat, 1,5-Naphthylendiisocyanat, oder Gemische derartiger Diisocyanate. Besonders bevorzugt sind 4,4'Diphenylmethandiisocyanat, 2,4-und 2,6-Toluylendiisocyanat und deren Gemisch.

Die beschriebenen Isocyanatgruppen-haltigen Polyester können einzeln, in Mischung miteinander oder mit isocyanatfreien ungesättigten Polyestern eingesetzt werden. Der Gehalt der Polyesterkomponente (A) an isocyanatfreien ungesättigten Polyestern kann 0 bis 90 Gew.-% betragen. Geeignete Isocyanatgruppen-freie Polyester sind u.a. solche wie unter (A1) beschrieben; bevorzugt sind jedoch ungesättigte Polyester, die keine mit Isocyanat reaktionsfähigen Gruppen enthalten.

Derartige Polyester lassen sich z.B. durch Umsetzung Hydroxylgruppen-terminierter Polyester mit Monocarbonsäuren oder deren esterbildenden Derivaten wie Essigsäure, Propionsäure, Acrylsäure, Methacrylsäure, Benzoesäure, deren Anhydriden oder Säurehalogeniden oder mit Monoisocyanaten wie Methylisocyanat, Cyclohexylisocyanat, Phenylisocyanat oder Benzylisocyanat oder mit Alkylierungsmitteln wie Diazomethan herstellen, ferner durch Verestern Carboxlgruppen-terminierter ungesättigter Polyester mit einwertigen Alkoholen, wie z.B. Methanol, Ethanol, Propanol, Isopropanol, Butanol, Hexanol, Benzylalkohol oder Allylalkohol.

Eine weitere Methode zur Herstellung von mit Isocyanat nicht reagierenden ungesättigten Polyestern ist die Herstellung auf übliche Weise aus den unter (A1) genannten Ausgangsstoffen unter Mitverwendung von einwertigen Alkoholen oder Monocarbonsäuren als Kettenabbrecher.

Die Säurezahlen der Polyester A liegen gewöhnlich zwischen 0 und 100, vorzugsweise zwischen 0 und 50, die OH-Zahlen zwischen 0 und 150, vorzugsweise zwischen 20 und 100, und die als Zahlenmittel bestimmten Molekulargewichte $\overline{M}_n$ zwischen ca. 500 und 5000, vorzugsweise zwischen ca. 1000 und 3000 (dampfdruckosmometrisch gemessen in Dioxan und Aceton; bei differierenden Werten wird der niedrigere als der korrekte angesehen).

Bevorzugte copolymerisierbare Monomere B sind Vinyl-und Vinylidenverbindung, also in der Polyestertechnologie gebräuchliche ungesättigte Verbindungen, die bevorzugt Vinyl-oder Allylgruppen tragen, insbesondere Styrol, aber auch beispielsweise kernchlorierte, -alkylierte und -alkenylierte Styrole, wobei die Alkylbzw. Alkenylgruppen 1 bis 4 Kohlenstoffatomen enthalten können, wie z.B. Vinyltoluol, Divinylbenzol, α-Methylstyrol, tert.-Butylstyrole, Chlorstyrole, Allylvinylbenzol; Vinylester von Carbonsäuren mit 2 bis 6 Kohlenstoffatomen, bevorzugt Vinylacetat; Vinylpyridin, Vinylnaphthalin, Vinylcyclohexan; Acrylsäure und Methacrylsäure und ihre Ester mit gesättigten oder ungesättigten Alkoholen mit 1 bis 4 Kohlenstoffatomen, wie (Meth)Acrylsäure-methyl-, -ethyl-, -butyl-, -allyl-, -methallyl-und -vinylester, ferner ihre Amide und Nitrile; Malein-, Citracon-, Mesacon-und Fumarsäure und ihre Halb-und Diester mit 1 bis 4 Kohlenstoffatomen in der Alkoholkomponente, ihre (gegebenenfalls substituierten) Halb-und Diamide, ferner cyclische Derivate der Malein-und Citraconsäure wie Maleinsäureanhydrid und cyclische Imide wie N-Methyl-, N-Phenyl-und N-Cyclohexyl-maleinimid; Allylverbindungen wie Allylbenzol und Allylester wie Allylacetat, Diallylphthalat, Diallylisophthalat, Diallylfumarat, Diallylcarbonat, Triallylphosphat, Triallylcyanurat, Besonders bevorzugt sind Styrol und seine Kernsubstitutionsprodukte.

Eine bevorzugte Variante des Monomers B (nachfolgend: "Reaktivverdünner") besteht in der Mitbenutzung von Verbindungen, die durch Umsetzen von Acrylsäure oder Methacrylsäure mit mehrwertigen Alkoholen oder Polyepoxiden mit mindestens zwei Hydroxyl-bzw. Epoxygruppen und einem auf die Hydroxyl-bzw. Epoxygruppen bezogenen Äquivalentgewicht von mindestens 130, bevorzugt mindestens 150, zugänglich sind. Derartige Verbindungen sind z.B. Bisphenol-A-di-(3-acryloyloxy-2-hydroxy-propyl)-ether und die analoge von der Methacrylsäure abgeleitete Verbindung, ferner die Acryl-und Methacrylsäureester des Perhydrobisphenols A, des ethoxylierten Bisphenols A, des propoxylierten Bisphenols A, der 2:1-Addukte aus aliphatischen Diolen mit Diisocyanaten, so aus Ethylenglykol oder Propandiol-1,2 mit Hexamethylendiisocyanat, Diphenylmethandiisocyanat, Toluylendiisocyanat, dimerisiertem Toluylendiisocyanat, Naphthylen1,5-diisocyanat. Weitere Verbindungen dieser Art sind Ester der Methacryl-oder Acrylsäure mit mehrwertigen Alkoholen, die durch Additionsreaktion von Tri-oder höheren Isocyanaten mit je einem Mol Ethylen-oder Propylenglykol pro Isocyanatgruppe herstellebar sind. Ferner gehören in diese Gruppe die Veresterungsprodukte aus OH-terminiertem gesättigten Polyestern und Acryl-oder Methacrylsäure.

Besonders bevorzugt unter den Verbindungen dieser Klasse sind wiederum solche, die keine mit Isocyanat reagierenden Gruppen enthalten, z.B. Bisphenol-A-di-(2-methacryloyloxy-ethyl)-ether, Bisphenol-A-di-(2-methacryloyloxy-propyl)-ether, 4,4'-Diaminodiphenylmethan-N,N'-dicarbonsäure-di-(β-methacryloyloxy-ethyl)-ester und 4,4'-Diaminodiphenylmethan-N,N'-dicarbonsäure-di-(β-methacryloyloxy-propyl)-ester.

Das Gewichtsverhältnis von "Reaktivverdünner" (also Estern, die mindestens zwei Acryloyl-oder Methacryloylgruppen pro Molekül enthalten) zu anderen Monomeren B beträgt bei der Mitverwendung von Reaktivverdünner in der Regel (15 bis 80) : (85 bis 20), vorzugsweise (20 bis 60) : (80 bis 40).

Bevorzugte Eindickungsmittel C sind Aldimine und Ketimine, die durch Umsetzung von aliphatischen Aldehyden mit vorzugsweise 2 bis 19, insbesondere 2 bis 8 C-Atomen, von aliphatischen Ketonen mit vorzugsweise 3 bis 19, vorzugsweise 3 bis 7 C-Atomen oder von cycloaliphatischen Ketonen mit vorzugsweise 5 bis 12, insbesondere 5 bis 7 C-Atomen einerseits und primären Aminen andererseits erhältlich sind.

Zur Aldiminherstellung bevorzugte Aldehyde umfassen Acetaldehyd, Propionaldehyd, Butyr-und Isobutyraldehyd, 2,2-Dimethylpropanol und 2-Ethylhexanal.

Zur Ketiminherstellung bevorzugte Ketone umfassen Aceton, Butanon-2, Pentanon-2, Pentanon-3, Hexanon, Heptanon, Methylisopropylketon, 4-Methylpentanon-2, 3-Methyl-heptanon-4, Diisobutylketon, Methylnonylketon, Methyl-t.-butylketon, Cyclopentanon, 2,2,4(2,4,4)-Trimethylcyclopentanon, Cyclohexanon, Methylcyclohexanon und 3,3,5-Trimethylcyclohexanon.

Zur Aldimin-und Ketiminherstellung bevorzugte primäre Amine sind aliphatische, cycloaliphatische, araliphatische und aromatische Amine mit 2 bis 24 C-Atomen und 1 bis 3, vorzugsweise 2, primären Aminogruppen, wobei die aliphatischen, cycloaliphatischen und araliphatischen Reste auch 1 bis 3, vorzugsweise 1, -O-, -NH-und/oder OH-Gruppen enthalten können, sofern daraus Azomethine erhältlich sind, die der anspruchsgemäßen Definition C genügen. Die Verwendung aromatischer Amine als Ausgangsverbindungen für die Aldimine und Ketimine C wird meist vermieden, weil viele aus den entsprechenden Azomethinen durch Hydrolyse wieder frei werdenden aromatischen Amine als Beschleuniger für die Copolymerisation der Komponenten A und B wirken und deshalb eine kalt härtende Einstellung der Polyesterharze bewirken würden. Es ist jedoch möglich, aromatische Amine einzusetzten, die diese beschleunigende Wirkung nicht besitzen.

Im Zweifelsfall ist es ratsam, die Eignung aromatischer Amine durch einen entsprechenden Versuch mit dem im Eizelfall in Frage kommenden Komponenten der erfindungsgemäß zu verwendenden Rezeptur zu testen.

Zur Aldimin-und Ketiminherstellung bevorzugte primäre Amine umfassen Butan-1,4-bis-(3-amino-propyl)-ether, Ethan-1,2-bis-(β-amino-ethyl-)ether, 4,4′-Diaminodicyclohexylmethan, 3,3′-Dimethyl,4,4′-diamino-dicyclohexylmethan, m-Xylylendiamin, 1,6-Diaminohexan, 1,4-Diaminocyclohexan, 1,3-Diaminocyclohexan, 1,4-Bis-aminomethyl-cyclohexan, Isophorondiamin, 2-Methyl-1,3-diamino-cyclohexan, 4-Methyl-1,3-diamino-cyclohexan, Ethylendiamin, Propylendiamin-1,2, Methyl-bis-(3-aminopropyl)-amin oder 3,5,3′,5′-Tetramethyl-4,4′-diamino-dicyclohexylmethan.

Viele der erfindungsgemäß bevorzugt zu verwendenden Eindickungsmittel C entsprechen der Formel

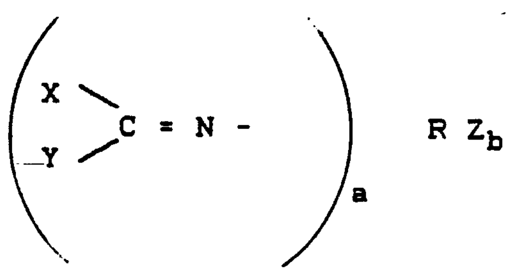

worin

R einen n-wertigen aliphatischen, cycloaliphatischen oder araliphatischen Rest, der durch eine -O-Brücke unterbrochen sein kann,

X Alkyl, Cycloalkyl, Aralkyl, Aryl,

Y die für X angegebene Bedeutung (unabhängig von X) oder Wasserstoff oder

X, Y zusammen Alkylen bedeuten

mit der Maßgabe, daß X und Y zusammen 2 bis 19 (im Falle Y $\neq$ H 3 bis 19) und im Falle von X+Y = Alkylen 5 bis 12 C-Atome enthalten,

Z OH, $NH_2$ oder NHR′

R′ $C_1$-$C_6$-Alkyl, Hydroxy-$C_1$-$C_6$-alkyl oder $C_6$-$C_{12}$-Aryl,

a eine ganze Zahl von 1 bis 3, vorzugsweise 2,

b Null, 1 oder 2, vorzugsweise Null oder 1,

n = a + b = 2 oder 3 bedeuten mit der Maßgabe, daß der Teil $RZ_b$ 2 bis 24 C-Atomen enthält.

Die erfindungsgemäß als Eindickungsmittel C geeigneten Azomethine sind durch bekannte Kondensationsreaktionen zwischen Polyaminen und Aldehyden oder Ketonen unter Wasserabspaltung zugänglich, wie sie z.B. in Houben-Weyl, "Methoden der Organischen Chemie", 4. Aufl., Band XI/2, Georg Thieme Verlag, Stuttgart 1958, S. 73 ff, beschrieben sind.

Bevorzugte Eindickungsmittel C sind beispielsweise die Umsetzungsprodukte aus
1 Mol 4,4'-Diamino-dicyclohexylmethan und 2 Mol Methyl-tert.-butyl-keton,
1 Mol Ethylenbis-(β-aminoethyl)-ether und 2 Mol Methyl-tert.-butyl-keton,
1 Mol β-Hydroxy-β'-amino-diethylether und 1 Mol Methyl-tert.-butyl-keton,
1 Mol 3,3'-Dimethyl-4,4'-diaminodicyclohexylmethan und 2 Mol Methyl-tert.-butyl-keton,
1 Mol 3,3'-Dimethyl,4,4'-diamino-dicyclohexylmethan und 2 Mol Methyl-isobutyl-keton,
1 Mol β-Hydroxy-β'-amino-diethylamin und 1 Mol Aceton und
1 Mol 1,1,3-Trimethyl-3-aminomethyl-5-amino-cyclohexan (Isophorondiamin) und 2 Mol Methylisobutylketon.

Weitere bevorzugte Eindickungsmittel C umfassen β-Hydroxy-β'-(methyl-isopropyl-ketimino)-diethylether, 1-Ethylamino-2-(methyl-t.-butyl-ketimino)-ethan und β-Hydroxy-β'-(methyl-t.-butyl-ketimino)-diethylamin.

Besonders bevorzugt sind Formmassen, in denen das Molverhältnis der Isocyanatgruppen in Komponente (A) zu den mit Isocyanat reaktionsfähigen Gruppen im Eindickungsmittel (C) zwischen 0,7 und 1,3 liegt.

Theoretisch sollte es notwendig sein, dem Ansatz der für die Hydrolyse der Azomethingruppen notwendige Wassermenge zuzusetzen. Dies ist auch möglich, wobei die Obergrenze beim 2-fachen, vorzugsweise beim 1,5-fachen der berechneten Wassermenge liegen sollte (der Wassergehalt der einzelnen Komponenten ist hierbei jedoch zu berücksichtigen).

Wir haben allerdings gefunden, daß weniger als die theoretisch notwendige Wassermenge mitunter zu einem besonders guten Eindickungsverhalten der Formmassen führen kann.

Nach einer besonders bevorzugten Ausführungsform wird die über den Wassergehalt der Komponenten hinausgehende Wassermenge in adsorbierter Form, z.B. an Zeolith oder Silicagel, zugesetzt.

Bevorzugte Radikalbildner (D) sind Peroxide, insbesondere Diacylperoxide wie Dibenzoylperoxid und Di-p-chlorbenzoylperoxid; Peroxyester wie tert.-Butyl-peroxybenzoat, tert.-Butyl-peroctoat, Dicyclohexylperoxydicarbonat; Alkylperoxide wie Bis-(tert.-butyl-peroxy)-butan, Dicumylperoxid, tert.-Butyl-cumyl-peroxid; Hydroperoxide wie Cumolhydroperoxid, tert.-Butyl-hydroperoxid, Cyclohexanonhydroperoxid, Methylethylketonhydroperoxid; Perketale; Ketonperoxide wie Acetylacetonperoxid.

Bevorzugt sind ferner peroxidfreie Verbindungen, die unter Aufspaltung einer C-C-Bindung Radikale bilden, z.B. Benzpinakol-silylether (beschrieben u.a. in Kunststoffe 68 (1978) Nr. 9, S. 553-555).

Bevorzugte weitere Zusätze (E) umfassen schrumpfmindernde Zusätze (sog. Low-Profile-oder kurz LP-Additive), Füllstoffe und Verstärkungsmaterialien, Polymerisationsinhibitoren, Pigmente, Farbstoffe, Gleit-und Trennmittel, Flammschutzmittel, UV-Absorber, Stabilisatoren gegen thermischen Abbau usw.

Bevorzugte LP-Additive (E) sind beispielsweise thermoplastische hochmolekulare Polymere (DE-PS 1 694 857), z.B. Polymerisate von Acryl-und Methacrylsäureestern wie Polymethylmethacrylat und Polyethylacrylat, Homo-und Copolymerisate von Vinylverbindungen wie Polystyrol und Polyvinylacetat, Celluloseester wie Celluloseacetatpropionat und -butyrat, wobei die Molekulargewichte zwischen 10 000 und 10 000 000 liegen können. Auch Substanzen mit geringerem Molekulargewicht, die bei Raumtemperatur flüssig bis harzartig und deshalb keine "Thermoplasten" im klassischen Sinne sind, sondern den Charakter von Weichmachern haben, sind als LP-Additive empfohlen worden (AT-PS 220 369), so z.B. Dibutylphthalat und Polypropylenadipat. Außerdem sind Kombinationen von LP-Additiven aus beiden Stoffgruppen als vorteilhaft beschrieben worden (DE-OS 3 426 425).

Bevorzugte Füllstoffe (E) sind z.B. Kreide, Talkum, Quarz-und Schiefermehl, Kaolin, Kalkspat, Dolomit, Glimmer, Schwerspat, Kieselgur, Tonernde, Aluminiumoxidhydrat, Glaskugeln oder Kohlenstaub. Sie werden vorzugsweise in Mengen von bis zu 300 Gew.-Teilen, bevorzugt bis zu 150 Gew.-Teilen, bezogen auf 100 Gew.-Teile der Summe der Komponenten (A) bis (D), eingesetzt.

Bevorzugte Verstärkungsmaterialien (E) sind z.B. Metall-, Asbest-, Kohlenstoff-und Glasfasern, ferner organische Fasern wie Baumwoll-, Polyamid-, Polyester-und Polyacrylnitrilfasern. Bevorzugt werden Glas-, Kohlenstoff-und Aramidfasern. Sie können in Mengen von bis zu 400 Gew.-Teilen, bevorzugt 30 bis 200 Gew.-Teilen, bezogen auf 100 Gew.-Teile der Summe der Komponenten (A) bis (D), eingesetzt werden.

Um eine vorzeitige Gelierung des Polyesterharzes zu verhindern, können Polymerisationsinhibitoren (E) in Konzentrationen von 0,0001 bis 1, vorzugsweise 0,001 bis 0,5 Gew.-Teilen, bezogen auf 100 Gew.-Teile der Summe der Komponenten (A) bis (D), eingesetzt werden.

Geeignete Inhibitoren (E) sind z.B. ein-und mehrwertige Phenole wie Hydrochinon, Toluhydrochinon, 4-t.-Butylbrenzkatechin, 2,6-Di-t.-butyl-p-kresol, Naphtohydrochinon, ferner Chinone wie p-Benzochinon, Chloranil, Napthtochinon, ferner Amine, vorzugsweise sekundäre Arylamine und ihre Derivate, Kupfersalze organischer Säuren, Anlagerungsverbindungen von Kupfer(I)-halogeniden an Phosphite. Diese und weitere bevorzugte Stabilisatoren sind in Houben-Weyl, "Methoden der Organischen Chemie", 4. Aufl., Band XIV/1, Georg Thieme Verlag, Stuttgart 1961, 433-453, beschrieben.

Zur Herstellung der Formmassen werden vorzugsweise zunächst die flüssigen und löslichen Anteile mit Dissolvern, Rührwerken o.ä. zusammengemischt. Die Compoundierung mit Füll-und Verstärkungsstoffen zu flächigen (SMC) oder teigartigen (BMC) Formmassen ist vielfältig beschrieben, z.B. im Kunststoff-Handbuch, Band VIII "Polyester", herausgegeben von R. Vieweg und L. Goerden, Carl Hanser Verlag, München 1973, S. 482 ff und 491 ff. Die Formmassen werden bis zum Erreichen der notwendigen Viskosität gelagert und dann unter Formgebung und Härtung weiter zu Formkörpern verarbeitet, vorzugsweise in beheizten Pressen oder in Spritzgießmaschinen.

Die Formtemperatur wählt man am besten mit 120 bis 180°C, vorzugsweise etwa 140°C; die Preßzeit beträgt bei einem Preßdruck von 10 bis 100 kp/cm$^2$ in der Regel 2 bis 10 Minuten, vorzugsweise etwa 4 Minuten.

Aus den erfindungsgemäß eingedickten Formmassen lassen sich Formkörper aller Art herstellen, z.B. Autokarosserieteile wie Kotflügel oder Möbelteile wie z.B. Schranktüren.

## Beispiele

Bei Prozentangaben handelt es sich im folgenden, soweit nichts anderes vermerkt ist, um Gewichtsprozente.

Als Polyesterharze auf Basis Isocyanatgruppen-terminierter ungesättigter Polyester A wurden die folgenden Produkte eingesetzt:

PEI 1: Styrolische Lösung (Festgehalt 70 %) eines ungesättigten Polyesters auf Basis Fumarsäure/Neopentylglykol/Butandiol-1,3 (Molverhältnis 1,0:0,65:0,65), umgesetzt mit 0,55 Molen (bezogen auf 2,3 Mol der genannten 3 Ausgangsverbindungen) Diphenylmethandiisocyanat. Viskosität 7600 mPa.s bei 20°C, Gehalt an freien Isocyanatgruppen 4,4 %.

PEI 2: Styrolische Lösung (Festgehalt 70 %) eines ungesättigten Polyesters auf Basis Fumarsäure/Neopentylglykol/Butandiol-1,3 (Molverhältnis 1,0:1,0:0,3), umgesetzt mit 0,58 Molen (bezogen auf 2,3 Mol der genannten 3 Ausgangsverbindungen) Diphenylmethandiisoeyanat. Viskosität 6700 mPa.s bei 20°C, Isocyanatgehalt 4,7 %.

PEI 3: Styrolische Lösung (Festgehalt 70 %) eine ungesättigten Polyesters auf Basis Fumarsäure/Neopentylglykol/Butylenglykol-1,3 (Molver hältnis 1,0:1,15:0,35), umgesetzt mit 1,03 Molen (bezogen auf 2,5 Mol der genannten 3 Ausgangsverbindungen) Diphenylmethandiisocyanat. Viskosität 3600 mPa.s bei 20°C, Isocyanatgehalt 6,3 %.

PEI 4: Styrolische Lösung (Festgehalt 70 %) eines ungesättigten Polyesters auf Basis Maleinsäureanhydrid/Phthalsäureanhydrid/Propylenglykol/Propylenoxid (Molverhältnis 0,7:0,3:0,3:1,3), umgesetzt mit 0,41 Molen (bezogen auf 2,6 Mol der genannten 4 Ausgangsverbindungen) Diphenylmethandiisocyanat. Viskosität 5100 mPa.s bei 20°C, Isocyanatgehalt 3,6 %.

Als Polyesterharz auf Basis eines Isocyanat-freien ungesättigten Polyesters A wurde folgendes Produkt eingesetzt:

PE 5: Styrolische Lösung (Festgehalt 61 %) eines ungesättigten Polyesterharzes auf Basis Maleinsäureanhydrid/Isophthalsäure/Propylenglykol/Diethylenglykol (Molverhältnis 0,7:0,3:0,65:0,45), Viskosität 1200 mPa.s bei 20°C.

Als copolymerisierbare Monomere wurden neben Styrol teilweise mitverwendet:

M1: Tripropylenglykol-bisacrylat;
M2: Diethylenglykol-bisacrylat;
M3: Bisphenol-A-bis-($\beta$-methacryloyloxy-ethyl)-ether.

Als Eindickungsmittel C wurden die folgenden Ketimine eingesetzt:

KI1: Ketimin aus einem Mol 4,4'-Diamino-dicyclohexylmethan und zwei Molen Methyl-tert.-butyl-keton,
KI2: Ketimin aus einem Mol Ethylen-bis-($\beta$-amino-ethyl)-ether und zwei Molen Methyl-tert.-butyl-keton,
KI3: Ketimin aus einem Mol $\beta$-Hydroxy-$\beta'$-amino-diethyl-ether und einem Mol Methyl-tert.-butyl-keton,
KI4: Ketimin aus einem MOl 3,3'-Dimethyl-4,4'-diamino-dicyclohexylmethan und 2 Molen Methyl-tert.-butylketon,
KI5: Ketimin aus einem Mol 3,3'-Dimethyl-4,4'-diamino-dicyclohexylmethan und zwei Molen Methylisobutylketon,
KI6: Ketimin aus einem Mol β-Hydroxy-β'-amino-diethyl-amin und einem Mol Aceton,
KI7: Ketimin aus einem Mol 1,1,3-Trimethyl-3-aminomethyl-5-amino-cyclohexan (Isophorondiamin) und zwei Molen Methylisobutylketon.

Die Viskositäten der Klarharze wurden nach DIN 53 015, die der eindickenden Ansätze mit einem Brookfield-Viskosimeter oder - bei Viskositätswerten oberhalb 60 Mio. mPa.sec - nach der Penetrometermethode gemessen.

Der Wassergehalt der als Füllstoffe eingesetzten Kreide betrug 0,3 %, derjenige der Glasfaser 0,1 %.

Beispiele 1-3

Harzmatten (SMC) wurden nach den in der Tabelle angegebenen Rezepturen (Mengenangaben in Gewichtsteilen) hergestellt. Ihr Glasfasergehalt betrug 25 % (Schnittlänge 26/26/52 mm). Die Harzmatten wurden zur Reifung bei 23°C gelagert und nach Erreichen der Verpreßbarkeit (s. Tabelle) in üblicher Weise bei 150°C Formtemperatur zu Platten der Maße 400 mm x 400 mm x 4 mm verpreßt. Die mechanischen Eigenschaften wurden an Proben bestimmt, die aus diesen Platten herausgeschnitten wurden. Die Verpressung wurde nach 14 Tagen wiederholt, wobei keine Änderung im Verarbeitungsverhalten festgestellt wurde.

| Beispiel | 1 | 2 | 3 |
|---|---|---|---|
| PEI1 | 74,4 | - | 49,5 |
| PEI2 | - | 74,5 | - |
| M1 | 20,0 | 20,0 | 40,0 |
| KI1 | - | - | 10,5 |
| KI3 | 5,6 | 5,5 | - |
| Härter 1* | 1,0 | 1,0 | 1,0 |
| Härter 2** | 1,0 | 1,0 | 1,0 |
| Zinkstearat | 5,0 | 5,0 | 5,0 |
| Kreide | 150 | 150 | 150 |
| Notwendige Reifezeit bis verpreßbar (Tage) | 1 | 0,5 | 2 |
| Biegefestigkeit (MPa) | 230 | 225 | 195 |
| Randfaserdehn. (%) | 4,0 | 2,8 | 3,4 |
| Biege-E-Modul (GPa) | 7,5 | 11,2 | 8,1 |
| Schlagzähigk. (kJ/qm) | 96 | 116 | 112 |

* Härter 1 = 1,1-Di-tert.-butyl-peroxi-3,3,5-trimethylcyclohexan, 50 % in inertem Weichmacher (5,3 % aktiver Sauerstoff).

** Härter 2 = Benzpinakol-silylether

Beispiele 4-7

Die aus der Tabelle hervorgehenden Rezepturbestandteile (Angabe in Gewichtsteilen) wurden in der dort angegebenen Reihenfolge vermischt und kurz mit einem Dissolver homogenisiert. Die Ansätze wurden bei 23°C im Dunkeln in verschlossenen Gefäßen gelagert. Nach den in der Tabelle angegebenen Reifezeiten wurden die Viskositäten gemessen (Angaben in mPa.s).

| Beispiel | 4 | 5 | 6 | 7 |
|---|---|---|---|---|
| PEI1 | - | - | - | 50,9 |
| PEI2 | 49,7 | 48,9 | - | - |
| PEI4 | - | - | 51,6 | - |
| M1 | 40 | 40 | 40 | 40 |
| KI1 | 10,4 | - | - | 9,1 |
| KI4 | - | 11,1 | 8,4 | - |
| Härtermischung* | 2 | 2 | 2 | - |
| Zinkstearat | 5 | 5 | 5 | - |
| Viskosität nach Reifezeit: | | | | |
| 10 Min. | 8800 | 13 600 | - | 11 000 |
| 30 Min. | - | 52 000 | 35 000 | - |
| 60 Min. | 122 000 | - | 42 400 | 29 600 |
| 1 Tag | 0,93 Mio. | 3,5 Mio. | - | 0,96 Mio. |
| 5 Tage | - | - | 760 000 | 20,2 Mio. |
| 7 Tage | 4,9 Mio. | 9,9 Mio. | - | - |
| 10 Tage | - | - | - | 48 Mio. |
| 14 Tage | 7,2 Mio. | 7,4 Mio. | 1,2 Mio. | 3 Mio. |
| 21 Tage | 9 Mio. | 8 Mio. | 1,4 Mio. | - |
| 28 Tage | - | - | 1,5 Mio. | 49 Mio. |

* Mischung aus gleichen Teilen Härter 1 und Härter 2 (siehe Beispiele 1-3).

Beispiel 8

Harzmatten wurden nach der unten angegebenen Rezeptur (Mengenangaben in Gewichtsteilen) hergestellt. Ihr Glasfasergehalt betrug 25 %, Schnittlänge 26/26/52 mm. Nach 24 stündiger Reifung bei 23°C waren die Matten verpreßbar (Vikosität des glasfaserfreien Ansatzes 10,25 Mio. mPa.s). Sie wurden in üblicher Weise (siehe Beispiele 1 bis 3) zu Platten verpreßt und auf mechanische Eigenschaften untersucht.

Rezptur:

PEI 3 65,50
M1 20,0
Kl2 14,5
Härter 1 (siehe Beispiele 1-3) 1,0
Härter 2 (siehe Beispiele 1-3) 1,0
Zinkstearat 5,0
Kreide 150

Mechansiche Eigenschaften:

Biegefestigkeit 276 MPa
Randfaserdehnung 3,4 %
Biege-E-Modul 11,4 GPa
Schlagzähigkeit 128 kJ/qm

Beispiele 9-13

Die in der Tabelle aufgeführten Rezepturbestandteile (Mengenangaben in Gewichtsteilen) wurden in der dort angegebenen Reihenfolge vermischt und mit einem Dissolver homogenisiert. Die Reifung der Ansätze geschah bei 23°C im Dunkeln in verschlossenen Gefäßen. Bestimmt wurden die offene Zeit der Ansätze (Mindestzeit bis zum Erreiche einer Viskosität von 60 000 mPa.s) und die Zeit, nach der zum ersten Mal eine Viskosität in dem für die Verarbeitung in Frage kommenden Bereich (mindestens $10^6$ mPa.s) gemessen wurden, sowie der dazugehörige Viskositätswert.

| Beispiel | 9 | 10 | 11 | 12 | 13 |
|---|---|---|---|---|---|
| PEI 2 | 32,4 | 37,5 | 50,2 | 41,9 | 40 |
| M1 | 60 | 60 | - | - | - |
| M2 | - | - | 40 | - | - |
| M3 | - | - | - | 50 | - |
| PE5 | - | - | - | - | 60 |
| KI5 | 7,6 | - | - | - | - |
| KI6 | - | 2,5 | - | - | - |
| KI7 | - | - | 9,8 | 8,1 | 5,7 |
| Kreide | 100 | 100 | 100 | 100 | 100 |
| offene Zeit | >5 Std. | >10 Min. | >30 Min. | >1 Std. | >10 Min. |
| Verarbeitungs-Viskosität erreicht nach | 5 Tagen | 10 Tagen | 4 Std. | 4 Tagen | 5 Std. |
| Viskosität (mPa.s) | 13,8 Mio. | 1,8 Mio. | 516 Mio. | 45,1 Mio | 7,4 Mio. |

## Ansprüche

1. Verfahren zur Herstellung eingedickter Polyesterharz-Formmassen mit Viskositäten von mindestens 1 000 000 mPa.s aus
A) 30 bis 85 Gew.-% α,β-ethylenisch ungesättigtem Polyester,
B) 10 bis 60 Gew.-% mit A) copolymerisierbarem Monomer,
C) 3 bis 40 Gew.-% mit A) unter Molekülaufbau reagierendem organischem Eindickungsmittel,
D) 0,1 bis 3 Gew.-% zur Initierung der Copolymerisaten von A) und B) befähigtem Radikalbildner und gegebenenfalls
E) weiterhin üblichen Zusätzen,
wobei sich die Prozentangaben auf die Summe der Komponenten A) bis D) beziehen,
dadurch gekennzeichnet, daß
1) der Polyester A 0,5 bis 12 Gew.-%, bezogen auf Polyester A, freie Isocyanatgruppen enthält und
2) die Komponente C eine Verbindung ist, die pro Molekül a) mindestens eine und höchstens drei Azomethingruppen und gegebenenfalls b) eine oder zwei Gruppen aus der Reihe Hydroxyl-, primäre und sekundäre Aminogruppen enthält, wobei die Summe a) + b) pro Molekül maximal 3 beträgt, mit der Maßgabe, daß die Azomethingruppen nicht Teil eines aromatischen Ringes sind.

2. Verfahren nach Anspruch 1, dadurch gekennzeichnet, daß die Formmassen
45 bis 75 Gew.-% A,
20 bis 50 Gew.-% B,
4 bis 15 Gew.-% C und,
0,1 bis 3 Gew.-% D und gegebenenfalls weitere übliche Zusätze enthalten, wobei sich die Prozentangaben jeweils auf die Summe der Komponenten A bis D beziehen.

3. Verfahren nach Ansprüchen 1 und 2, dadurch gekennzeichnet, daß der Polyester A 1 bis 7 Gew.-%, bezogen auf A, freie Isocyanatgruppen enthält.

4. Verfahren nach Ansprüchen 1-3, dadurch gekennzeichnet, daß das Eindickungsmittel C zwei Azomethingruppen enthält.

Europäisches Patentamt

# EUROPÄISCHER RECHERCHENBERICHT

Nummer der Anmeldung

EP 87 11 0075

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 633 294 (BAYER)<br>* Anspruch 1; Seite 5, Absatz 1 - Seite 6, Absatz 3 *<br>--- | 1 | C 08 G 18/68<br>C 08 G 18/10<br>C 08 G 18/32<br>C 08 F 283/01 |
| A | FR-A-1 461 924 (MARLES-KUHLMANN)<br>* Zusammenfassung, Punkt 1; Seite 3, linke Spalte, Absätze 1,2; rechte Spalte, Absatz 2 *<br>----- | 1 | |
| | | | RECHERCHIERTE SACHGEBIETE (Int. Cl.4) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 30-11-1987 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)